# EUROPEAN PATENT APPLICATION

(11) **EP 1 081 896 A2**
(43) Date of publication of application: **07.03.2001**
(21) Application number: 00402337.0
(22) Date of filing: 22.08.2000
(51) Int. Cl.: H04L 12/28

(54) **Method and device for communicating in a centralised network**

(30) Priority: 27.08.1999 FR 9910879
(71) Applicant: CANON KABUSHIKI KAISHA, Tokyo (JP)
(72) Inventor: Braneci, Mohamed, 35000 Rennes (FR); Rousseau, Pascal, 35000 Rennes (FR)
(74) Representative: Santarelli, Marc

(57) **Abstract**

The present invention concerns a method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said method includes a step, performed at the base station, of sending to at least one peripheral station a request for obtaining part of a local information report.

## Description

The present invention concerns a method and device for communicating in a network and systems using them. It applies in particular to local wireless networks with centralised architecture, for which each communication is organised between a so-called base communication station and so-called peripheral communication stations.

One example of such a communication network is given by the European standard HIPERLAN type 2 (the initials of the English words "High Performance Radio Local Area Network").

In such a local network, the base station supplies a synchronisation signal to all the peripheral stations present in a cell of the network. All the stations (the base station and one or more peripheral stations) which thus synchronise with each other constitute what is termed a cell.

Nevertheless, it has been noted that, for reasons of performance, notably in order to order to save on bandwidth, it was necessary to envisage also direct communications between two peripheral stations, these communications remaining controlled by the base station.

In order to envisage this type of communication, referred to as communication in direct mode, it is of course necessary for the base station to first of all give its authorisation for such communications.

To do this, the base station holds a so-called global connection table which includes all the so-called local information reports received by the base station coming from each peripheral station, and which said base station consults before giving its authorisation for a communication between two peripheral stations in direct mode.

Each local information report established by a peripheral station contains information representing the quality of the channel between said peripheral station concerned and the other peripheral stations of the cell under consideration.

The information representing the quality of the channel between two peripheral stations is characterised for example by the power of the signal received at a given station. In that case, the quality of the channel results, in the global connection table, in a value denoted RSS ("Received Signal Strength") and which represents this received power.

The base station uses the information contained in this table, for example in order to accept or reject a communication in direct mode during the procedure of establishing connections, or to initialise the power control procedure.

The function of the power control procedure is to determine the optimum power on transmission at each peripheral or base station.

This information is obtained by the base station periodically or when one or more new peripheral stations join the cell in the network.

In order to obtain this information, the base station controls a so-called calibration mechanism having two phases:
- one referred to as the measuring phase during which the base station requests the peripheral stations to broadcast or send a signal to the base station and the other peripheral stations, the stations receiving this signal then measuring its power; and
- a second phase known as the report phase during which the base station interrogates the peripheral stations in order to know the results of the measurements made previously.

This calibration procedure enables the base station to update the global connection table and therefore to be in a position to make a decision with regard to the possibility of establishing communications in direct mode between two peripheral stations for example.

However, it may happen that the global connection table of the base station is only partially up to date.

This partial updating may be due either to transmission errors which may occur between the base station and peripheral stations, or be ascribable to insufficient bandwidth for transmitting all the local information reports from the peripheral stations to the base station.

The present invention aims to remedy at least one of the above-mentioned problems with transmission errors and insufficiency of the network bandwidth.

To this end, the present invention proposes, according to a first aspect, a method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,

characterised in that said method includes a step, performed at the base station, of sending to at least one peripheral station a request for obtaining a part of a local information report.

The invention saves on the available resources in the network in terms of bandwidth by requesting, from at least one peripheral station, a partial local information report instead of a complete report. The peripheral station or stations concerned will then have to supply, in this partial report, the most pertinent information which will enable the base station to evaluate the quality of reception of the communication channels between the station or stations concerned and other peripheral stations in order to authorise or not a communication in direct mode between two peripheral stations for example.

Correlatively, the invention also concerns a communication device in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said device has means of sending, to at least one peripheral station, a request for obtaining a part of a local information report.

According to one characteristic, the method also includes the following steps performed at the base station prior to the sending step:
- determining the bandwidth necessary (BWN) to the reception of all the local information reports from the peripheral stations,
- comparing the bandwidth necessary (BWN) with the bandwidth available (BWA) in the network,
- allocating to at least one peripheral station a fraction (BWA/K) of the bandwidth available (BWA) when the bandwidth necessary (BWN) is greater than said bandwidth available (BWA).

This therefore makes it possible to establish a match between the bandwidth available and the request for obtaining part of a local information report.

According to another characteristic, the request for obtaining part of a local information report is sent to said at least one peripheral station to which a fraction (BWLIR) of the bandwidth available has been allocated.

For example, the part of the local information report must contain at least one item of information representing the lowest reception quality of at least one communication channel between said at least one peripheral station and another peripheral station.

Obtaining this information enables the base station to prevent direct communications between the worst peripheral stations.

According to another example, the part of the local information report must contain at least one item of information representing the highest reception quality of at least one communication channel between said at least one peripheral station and another peripheral station.

Obtaining this information enables the base station to favour the best direct communication between peripheral stations.

According to another example, the part of the local information report must contain at least one item of information representing the reception quality of the communication channel between said at least one peripheral station and another peripheral station which has most varied compared with the last measurement.

Obtaining this information enables the base station to know the connections whose quality has changed.

The connections whose quality has remained constant do not need to be transmitted.

According to one characteristic, the method includes a step of receiving part of a local information report coming from said at least one peripheral station.

According to another characteristic related to the previous one, the method includes a step of modifying a connection table forming part of the base station and containing all the local information reports from the peripheral stations, according to the information contained in the part of the local information report coming from said at least one peripheral station.

Thus the base station updates its connection table even when the bandwidth necessary to the reception of all the local information reports coming from the peripheral stations in the network is greater than the bandwidth available in the network.

On the other hand, in the prior art previously cited, the connection table cannot be updated in such a case.

According to yet another characteristic, for each item of information contained in the part of the local information report coming from said at least one peripheral station and which represents the reception quality of a communication between said at least one peripheral station and another peripheral station, said method includes a step of associating, with each said item of information, a time indication for identifying the age of this information.

Thus the base station can request local information reports from the peripheral stations whose information is the oldest. This also assists the updating of the table and therefore a more reliable decision on the part of the base station with regard to the authorisation of communications in direct mode.

According to a second aspect, the present invention concerns a method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said method includes a step, performed at a peripheral station, of receiving a request issued by the base station for obtaining part of a local information report.

Thus the peripheral station receiving this request will have to prepare a partial report to send to the base station so that the latter can update its connection.

Correlatively, the invention also relates to a communication device in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said device has means for receiving a request issued by the base station for obtaining part of a local information report.

According to one characteristic, the method includes the following steps:
- selecting at least one item of information which will constitute at least part of the local information report to be sent,
- sending said part of the local information report to the base station.

It can be envisaged that the base station decides on the choice of the pertinent information which the peripheral station must select and send in the report or that this choice is left to the peripheral station.

According to a third aspect, the invention relates to a method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said method includes the following steps performed at a peripheral station:
- receiving a request issued by the base station for obtaining a local information report,
- preparing a part of the local information report according to the reception quality of at least one communication channel between said peripheral station and another peripheral station, and
- sending said part of the local information report to the base station.

Thus, even when the base station requires a complete local information report, the peripheral station may decide, according to suitable criteria, to draw up only a partial report.

For example, to do this, the peripheral station takes such a decision in the light of the reception quality of one or more communication channels between itself and one or more other peripheral stations.

More particularly, this may occur when the reception quality of a communication channel has not varied since the sending of the previous complete or partial local information report.

This may also occur when, following transmission errors on at least one communication channel, the peripheral station is not in a position to evaluate the current reception quality of said channel.

Correlatively, the invention also relates to a communication device in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said device has:
- means for receiving a request issued by the base station for obtaining a local information report,
- means for preparing a part of the local information report according to the reception quality of at least one communication channel between said peripheral station and another peripheral station, and
- means for sending said part of the local information report to the base station.

According to one characteristic, the step of preparing part of a local information report includes more particularly a step of selecting at least one item of information which constitutes at least part of the local information report to be sent.

According to one aspect, the invention relates to a base station, characterised in that it has a communication device in accordance with the brief disclosure above.

According to one aspect, the invention relates to a base station, characterised in that it constitutes a communication device in accordance with the brief disclosure above.

According to one aspect, the invention also relates to a peripheral station, characterised in that it has a communication device as briefly disclosed above.

According to one aspect, the invention also relates to a peripheral station, characterised in that it constitutes a communication device as briefly disclosed above.

According to one aspect, the invention relates to a data-processing apparatus, characterised in that it has a communication device in accordance with the brief disclosure above.

According to one aspect, the invention relates to a data-processing apparatus, characterised in that it is connected to a communication device as briefly disclosed above.

The processing apparatus is for example chosen from amongst a printer, a server, a computer, a facsimile machine, a scanner, a video tape recorder, a set-top box, a television receiver, a camcorder, a loudspeaker, a digital camera or a digital photographic apparatus.

According to one aspect, the invention relates to a communication network, characterised in that it includes several data-processing apparatus in accordance with the above, only one of which has means of sending a request.

According to one aspect, the invention relates to a communication network, characterised in that it includes a base station and several peripheral stations which are in accordance with the above brief disclosure.

The invention also relates to an information storage means, possibly totally or partially removable, which can be read by a computer or processor containing instructions of a computer program, characterised in that it makes it possible to implement the communication method as briefly disclosed above.

The invention also relates to an information storage means which can be read by a computer or processor containing data coming from the implementation of the communication method as briefly disclosed above.

The invention also relates to an interface for receiving the instructions of a computer program, characterised in that it makes it possible to implement the communication method as briefly disclosed above.

The invention further relates to a computer program product loadable into a programmable device, comprising software code portions for performing the steps of the method briefly disclosed above, when said product is run on a programmable device.

The advantages and characteristics peculiar to the communication device, to the base station including or constituting such a device, to the peripheral station including or constituting such a device, to the data processing apparatus including or being connected to such a device, to said network including such data-processing apparatus and to said network including such a base station and such peripheral stations, as well as to the information storage means, to the interface and the computer program product, being the same as those disclosed above concerning the communication method according to the invention, they will not be repeated here.

Other advantages, aims and characteristics of the present invention will emerge from the following description, given with regard to the accompanying drawings, in which:
- Figure 1 depicts schematically the architecture of an electronic circuit incorporated in a communication device according to the present invention and adapted to function in base station mode.
- Figure 2 depicts schematically the architecture of an electronic circuit incorporated in a communication device according to the present invention and adapted to function in peripheral station mode, in relation with the electronic circuit illustrated in Figure 1,
- Figure 3 depicts schematically a network implementing the present invention and including a base station and two peripheral communication stations,
- Figures 4a and 4b depict respectively local and global connection tables stored in the peripheral stations 200 in the base station 100 of Figures 2 and 1;
- Figures 5, 6 and 7 each depict a flow diagram of an algorithm executed by the peripheral station 200 of Figure 2, on reception of a command coming from the base station 100;
- Figures 8 and 9 each depict a flow diagram of an algorithm executed by the base station 100 of Figure 1, during the calibration phase and when a command is sent to one or more peripheral stations.

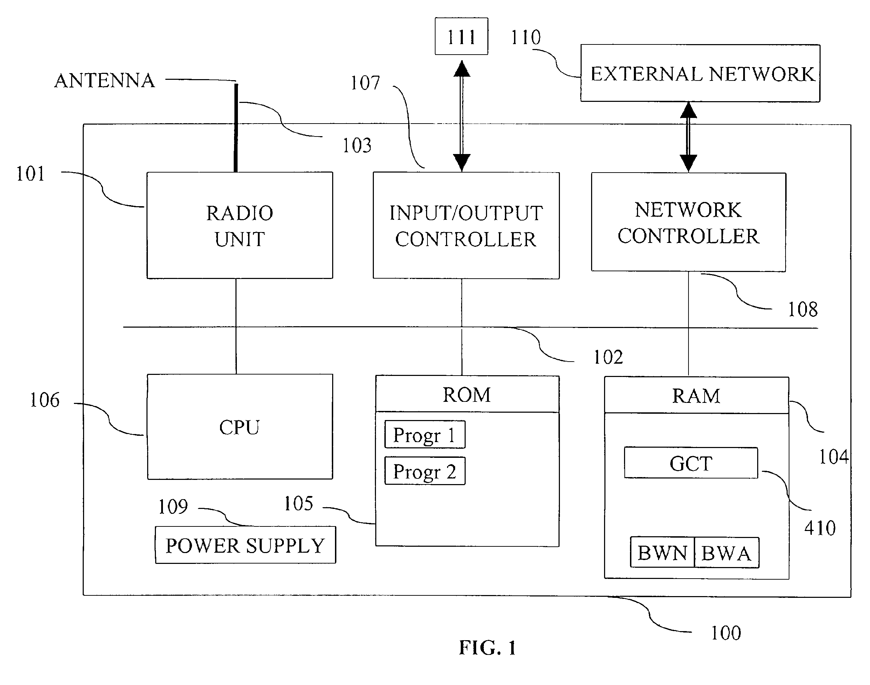

Figure 1 depicts an example of an electronic circuit of a wireless communication device, using for example the European standard HIPERLAN/2 (HIPERLAN type 2) in the course of being specified by the ETSI, able to be connected to a network of the STN (Switched Telecommunication Network), Ethernet, ATM, IEEE 1394, etc type.

This device is integrated into a HIPERLAN/2 base station or can itself constitute such a base station as depicted in Figure 1.

The function of a HIPERLAN/2 base station is notably to provide the synchronisation of the communication network, to allocate the bandwidth to the peripheral stations constituting, with the base station, the network by implementing a protocol of the dynamic TDMA (Time Distribution Multiple Access) type.

This communication device can be integrated into a data-processing apparatus of the computer, printer, facsimile machine, scanner, video tape recorder, set-top box, television receiver, camcorder, loudspeaker, digital camera or digital photographic apparatus type, in which case the data-processing apparatus itself constitutes the base station, or can be connected to one of the previously cited appliances as depicted in Figure 1.

The electronic circuit 100 has, connected together by an address and data bus 102:
- a radio unit 101, provided with an antenna 103,
- an input/output controller 107,
- a network controller 108,
- a central processing unit 106,
- a read only memory ROM 105, and
- a random access memory RAM 104.

In addition, an electrical power supply 109 is provided for supplying all the components of the electronic circuit 100 (the electrical connections concerning the power supply 109 are not depicted).

The network controller 108 manages the interface with an external network 110, for example of the STN type.

This network controller constitutes a network interface which can receive, by means of the external network, the instructions or code portions of a computer program allowing the implementation of the method according to the invention.

The input/output controller 107 is connected to an information source 111 (for example an image, sound, text or graphics sensor, a telephone, a facsimile machine, a photographic apparatus, a video camera, a video tape recorder, a camcorder, etc) and/or to an information destination (for example a television receiver, a monitor, a music centre, a telephone, a facsimile machine, a video tape recorder, etc).

All the components illustrated in Figure 1 are well known to persons skilled in the art of communication circuits with a processor and, more generally, information processing circuits. They are therefore not detailed here. The electronic circuit 100 and, in particular, the central unit 106, are adapted to exploit all the known functionalities of the HIPERLAN type 2 standard.

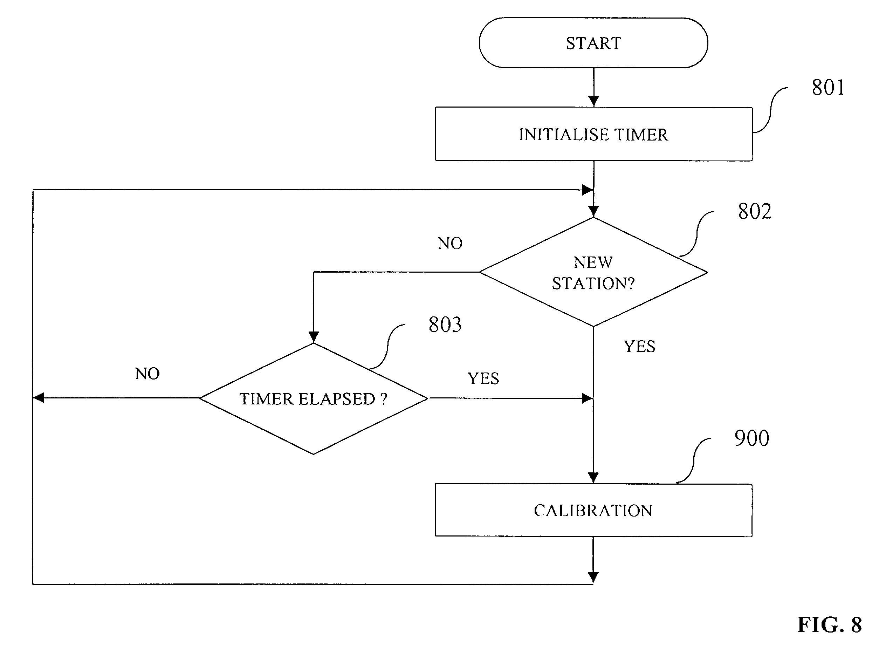

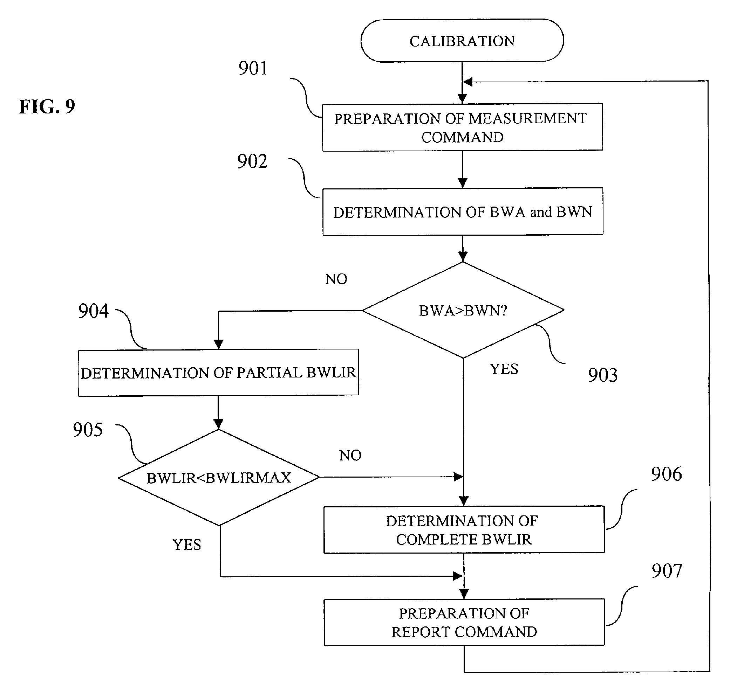

The central unit 106 is also adapted to implement the method according to the invention seen from the base station side and, in particular, the computer programs denoted "Progr 1" and "Progr 2" based on the algorithms whose flow diagrams are respectively illustrated in Figures 8 and 9.

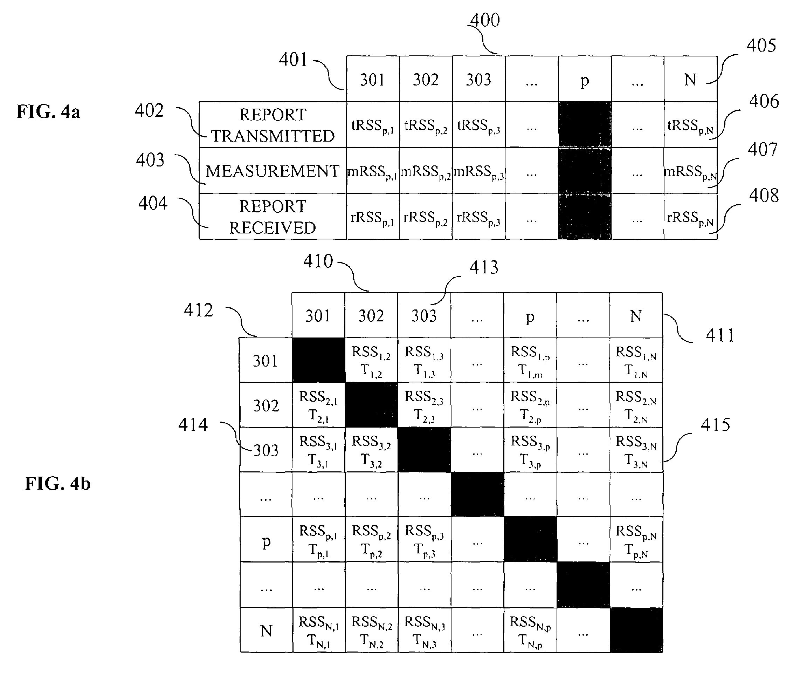

The random access memory 104 stores the following information in the following registers:
- "GCT" represents the so-called global connection table 410, which is also illustrated in Figure 4b and contains all the Local Information Reports (LIR) transmitted by the peripheral stations of the network, each Local Information Report issuing from a peripheral station containing data concerning the information representing the quality of reception of each communication channel between said peripheral station and the other peripheral stations.
- "BWN" designates the Bandwidth Necessary to the reception of all the local information reports from the peripheral stations,
- "BWA" designates the Bandwidth Available in the network.

The read only memory 105 constitutes a means of storing information which can be read by a computer or microprocessor, storing instructions of several computer programs "Progr 1" and "Progr 2" for implementing the method of the invention.

According to a variant, the read only memory 105 is removable, partially or totally, and includes, for example, a magnetic tape, a flash memory, a diskette or a fixed-memory compact disc (CD-ROM).

The electronic circuit 100 constitutes a programmable device in which a computer program product is loaded. Such computer program product comprises software code portions or instructions corresponding to the steps of the algorithms depicted in the drawings 8 and 9.

Thus, the running of the computer program product allows the method according to the invention to be performed.

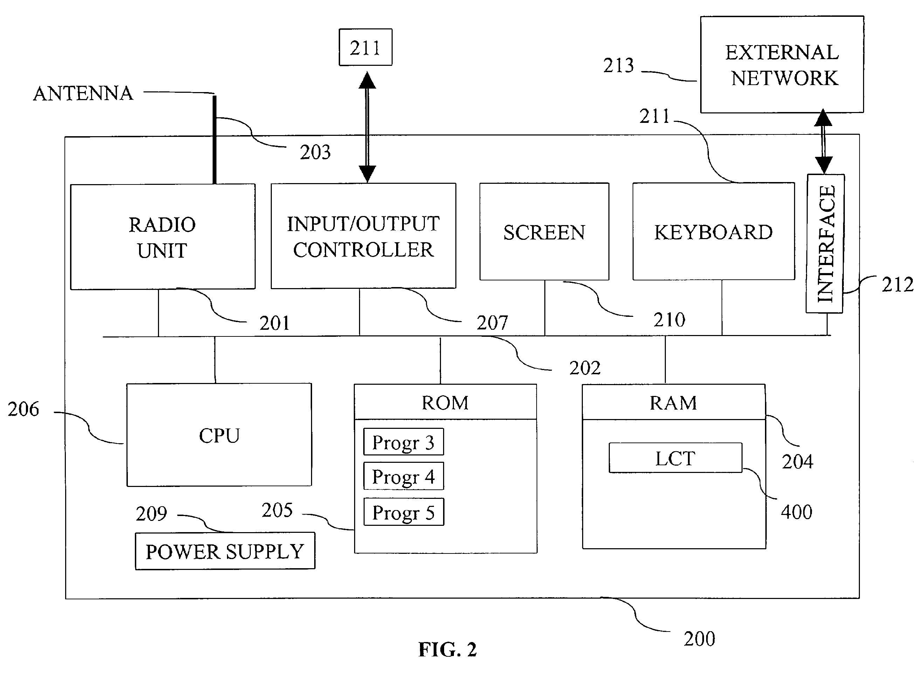

Figure 2 depicts an example of an electronic circuit of a wireless communication device according to the invention using for example the HIPERLAN/2 European standard in the course of being specified by the ETSI.

This device is integrated into a HIPERLAN/2 peripheral station or can in itself constitute such a base station, as depicted in Figure 2.

This communication device can be integrated into a data-processing apparatus of the computer, printer, facsimile machine, scanner, video tape recorder, decoder, television receiver, camcorder, loudspeaker, digital camera, digital photographic apparatus, etc type, or can be connected to one of the previously cited apparatus as depicted in Figure 2.

The electronic circuit 200 includes, connected together by an address and data bus 202:
- a radio unit 201, provided with an antenna 203,
- an input/output controller 207,
- a central processing unit 206,
- a screen 210,
- a keyboard 211,
- a read only memory ROM 205, and
- a random access memory RAM 204.

In addition, an electrical power supply 209 is provided for supplying all the components of the electronic circuit 200 (the electrical connections concerning the power supply 209 are not depicted).

The input/output controller 207 is connected to an information source 211 (for example an image, sound, text or graphics sensor, a telephone, a facsimile machine, a photographic apparatus, a video camera, a camcorder, etc) and/or to an information destination (for example a television receiver, a monitor, a music centre, a telephone, a facsimile machine, a video tape recorder, etc).

The electronic circuit 200 also includes a network interface 212.

The network interface 212 can receive, for example, by means of an external network 213, for example of the STN type, the instructions or code portions of a computer program allowing the implementation of the method according to the invention.

All the components illustrated in Figure 2 are well known to persons skilled in the art of communication circuits with a processor and, more generally, information processing circuits. They are therefore not detailed here. The electronic circuit 200 and, in particular, the central unit 206, are adapted to exploit all the known functionalities of the HIPERLAN/2 standard.

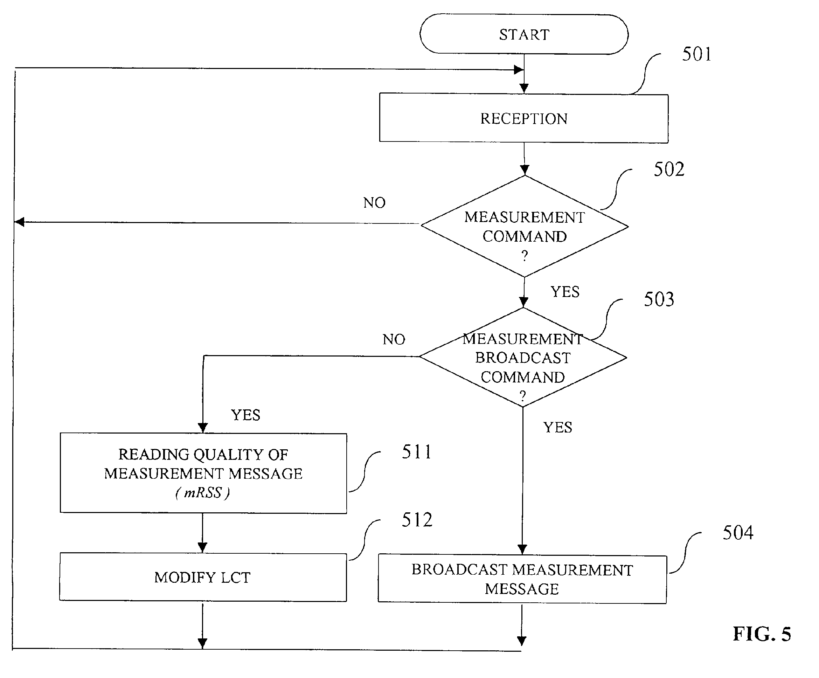

The central unit 206 is also adapted to implement the method according to the invention seen from the base station side and, in particular, the computer programs denoted "Progr 3", "Progr 4" and "Progr 5" based on the algorithms whose flow diagrams are respectively illustrated in Figures 5, 6 and 7.

The random access memory 204 stores the following information in the following register:
- "LCT" designates the local connection table 400 which is also illustrated in Figure 4a and which contains the information representing the quality of reception, by the peripheral station, of a signal or pilot frame sent by adjacent peripheral stations.

In other words, this information represents the reception quality of each communication channel between the peripheral station containing the table and the other peripheral stations.

The read only memory 205 constitutes a means of storing information which can be read by a computer or microprocessor, storing instructions of several computer programs "Progr 3", "Progr 4" and "Progr 5" for implementing the method of the invention.

According to a variant, the read only memory 205 is removable, partially or totally, and includes, for example, a magnetic tape, a flash memory, a diskette or a fixed-memory compact disc (CD-ROM).

The electronic circuit 200 constitutes a programmable device in which a computer program product is loaded. Such computer program product comprises software code portions or instructions corresponding to the steps of the algorithms depicted in the drawings 5 to 7.

Thus, the running of the computer program product allows the method according to the invention to be performed.

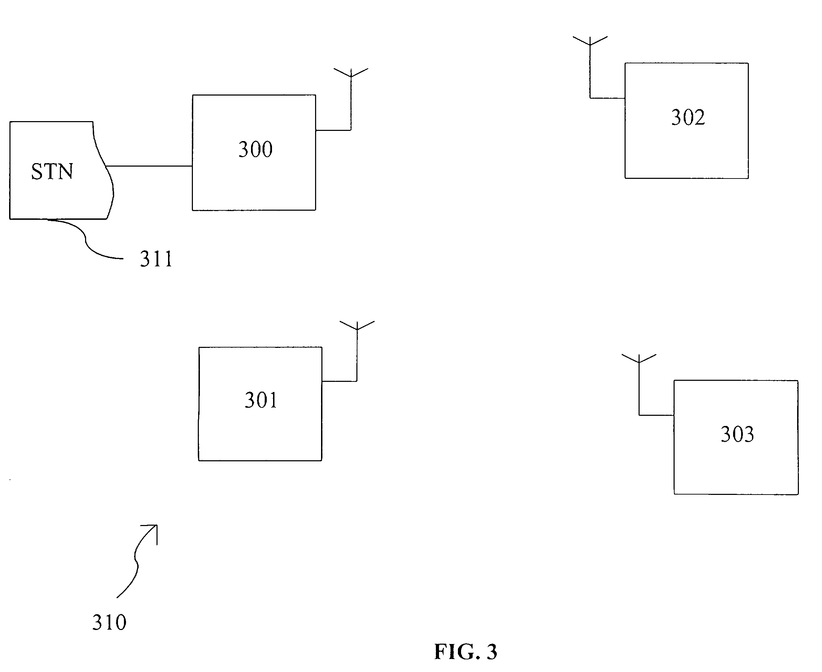

Figure 3 depicts a local wireless communication network with centralised architecture 310 comprising:
- a base station of the HIPERLAN/2 type denoted 300, connected to an STN network 311,
- a peripheral station of the HIPERLAN/2 type 301,
- a peripheral station of the HIPERLAN/2 type 302,
- a peripheral station of the HIPERLAN/2 type 303.

The base station 300 has, for example, the structure and functionalities of the base station 100 described with reference to Figure 1.

Each of the peripheral stations 301 to 303 has, for example, the structure and functionalities of the peripheral station 200 described with reference to Figure 2.

On initialisation of this system, the peripheral stations 301, 302 and 303 are synchronised with the base station 300, which allocates to them the available resources in terms of bandwidth necessary to their communications.

This particularity will also be explained subsequently with reference to Figure 9.

If the peripheral station 302 wishes is to communicate directly with the peripheral station 303, the peripheral station 302 initiates a suitable procedure so that the base station 300 authorises or not this communication in direct mode, after having consulted a global connection table denoted GCT in Figure 1 and including the information issuing from all the local information reports received by said base station.

The local connection table (LCT) 400 illustrated in Figure 4a contains the information representing the quality of reception of a peripheral station containing the present table.

For a better understanding of the invention it will be considered, in the present case, that the network 310 according to the invention includes peripheral stations denoted 301, 302, 303, ..., p-1, p, p+1, ... N, and that the table in Figure 4a concerns the station "p" (not depicted in Figure 3).

A table of this type is presented in each of the peripheral stations of the network according to the invention.

This table has:
- on a first row, the identifiers of the peripheral stations 301, 302, 303, ..., p-1, p+1, ... N which are, at one time or another, known to the peripheral station "p" containing the present table,
- on a second row, the information representing the reception quality (tRSS), of the present peripheral station, for signals coming from other peripheral stations, information previously transmitted in a local information report (LIR) to the base station,
- on a third row, the last measurements of the information representing the reception quality (mRSSi,j) of the present peripheral station, for signals coming from other peripheral stations, and
- on a fourth row, the information representing the reception quality (rRSS) of other peripheral stations, when these receive a measurement message coming from the present peripheral station. This information (rRSS) is received by the peripheral station "p" when these other peripheral stations transmit a local information report (LIR) to the base station and to the said station "p".

The global connection table 410 illustrated in Figure 4b corresponds to the collection of the local information reports (LIR) 402 coming from the different peripheral stations of the network.

This table has:
- on a first row 411, the identifiers of the peripheral stations 301, 302, 303, ..., p, ..., N which are, at one time or another, known to the base station 300,
- on a first column 412, the identifiers of the peripheral stations 301, 302, 303, ..., p, ..., N which are, at one time or another, known to the base station 300, and
- at each intersection of a row and column (RSSi,j), the information representing the reception quality of a signal between two peripheral stations, and an associated time indication enabling the age of this information (Ti,j) to be supplied.

The peripheral station identified on a row being the transmitter of the signal and the peripheral station identified in a column being the receiver of this signal.

At each reception of a local information report, the base station 300 updates its global connection table.

Figure 5 depicts the algorithm executed by the central unit 206 of the peripheral station 200 and by each station 301, 302, 303 ... of the network according to the invention, when it receives a measurement command coming from the base station 300.

It should be noted that the measurement command is sent during a so-called measurement phase of a so-called calibration mechanism used by the base station, which mechanism also has a so-called report phase following on from the measurement phase.

This will be explained subsequently during the description given with reference to Figures 8 and 9.

For an understanding of the invention, it will be considered that the peripheral station concerned is the station 200 of Figure 2.

Reception of this command is determined by a test for reception of such a message 502.

In the affirmative, during a test 503, the central unit 206 of the peripheral station 200 determines whether it is a case of a command to send a measurement message, that is to say whether it falls to the peripheral station concerned to send a measurement message or pilot signal to the other peripheral stations.

When the result of the test 503 is positive, the central unit 206 of the peripheral station 200 prepares a measurement message for the radio unit 201 for sending to all the peripheral stations in accordance with the information supplied by the base station 300 in the command message.

When the result of the test 503 is negative, during a step 511 the radio unit 201 of the peripheral station 200 prepares to receive a measurement message coming from one or more peripheral stations and to inform the central unit 206 of the quality of the reception (mRSS).

Next, in the step 512, the central unit 206 updates an element mRSSi 403 in the local connection table "LCT" 400 before awaiting a new reception at step 501.

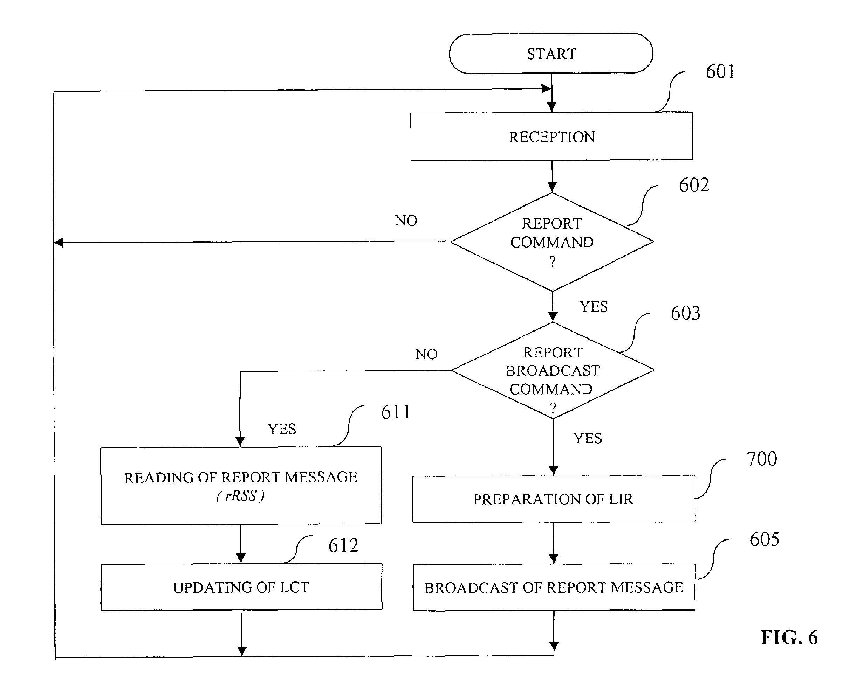

Figure 6 depicts the algorithm executed by the central unit 206 of the peripheral station 200, when it receives a report request or command coming from the base station 300 requesting the sending of a partial local information report.

The sending by the base station of such a report request or command fits within the calibration mechanism used by the base station, as previously mentioned in Figure 5 and described in more detail subsequently with reference to Figures 8 and 9.

Reception of this command is determined by a test for reception of such a message during a step denoted 602.

In the affirmative, during a test 603, the central unit 206 of the peripheral station 200 determines, from the previous request, whether it is a case of a command to send a report message.

When the result of the test 603 is positive, the central unit 206 of the peripheral station 200 prepares, at step 700, a report message intended for the radio unit 201 for sending, during the step 605, to all the peripheral stations, in accordance with the information supplied by the base station 300 in the command message.

When the result of test 603 is negative, during a step 611, the radio unit 201 of the peripheral station 200 prepares to receive a report message coming from another peripheral station and to send it to the central unit 206.

This enables the receiving peripheral station to obtain additional information on the network and the state of the connections between other peripheral stations.

Next, in the step 612, the central unit 206 updates an element rRSS 404 of the local connection table 400 before awaiting a new reception at step 601.

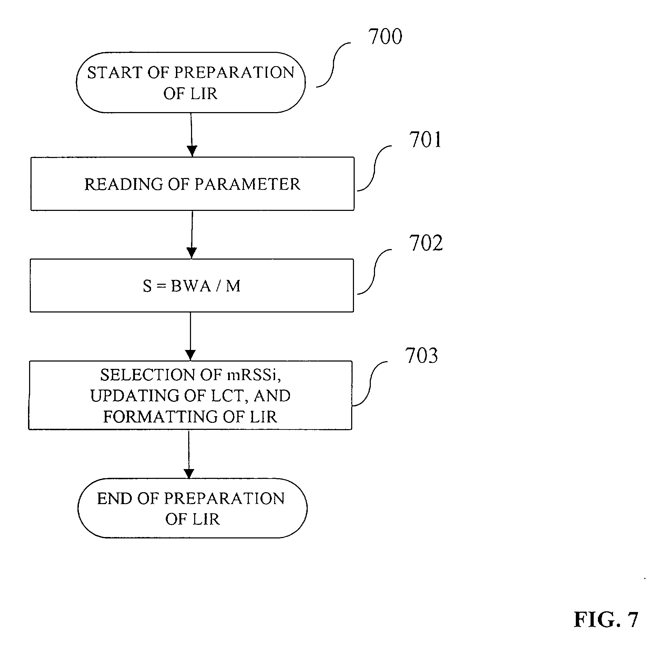

Figure 7 depicts the algorithm executed by the central unit 206 of the peripheral station 200, in order to prepare part of a local information report before it is broadcast by the radio unit 106 on reception of a command to send (step 603 of Figure 6) a report coming from the base station.

On reception of this command, the central unit 206 extracts therefrom, at step 701, the parameters associated with this command such as, for example, the bandwidth allocated (BWA) for the production of the report message.

Next, at the step 702, a parameter S is determined as being the number of information elements mRSS which can be contained in the Local Information Report (LIR) which is said to be partial when all the elements mRSS of the local connection table (LCT) cannot be contained in the LIR.

A selection process follows at the following step 703, during which the S peripheral stations having the greatest variations in reception quality (mRSS-tRSS) are determined. For each peripheral station thus selected, the information tRSS = mRSS is updated in the local connection table (LCT).

The local information report (LIR) contains, for each peripheral station selected, its identifier and the associated reception quality (RSS).

These steps 702 and 703 correspond to a selection of at least one pertinent item of information which will form part of the partial report.

The local information report (LIR) is then formatted in a report message before sending at step 605.

It is to be noted that, as an alternative, the local information report (LIR) can contain at least one item of information representing the highest or lowest reception quality.

In a first variant the local information report contains the information representing the power of the weakest signal received.

Obtaining this information enables the base station to prevent direct connections between the worst peripheral stations.

In a second variant the local information report contains the information representing the power of the strongest signal received.

Obtaining this information enables the base station to favour direct connections for the best peripheral stations.

Figure 8 depicts the algorithm executed by the central unit 106 of the base station 100, in order to implement the calibration phase.

During the phase of bringing into service, the base station 100 initialises, at step 801, a timer TEMPO (not shown) of the central unit 106 so that a signal TEMPO is generated every 100 ms.

Next the base station 100 awaits (test 802) the arrival of a new peripheral station in the cell or the activation of the periodic signal TEMPO (test 803) in order to pass to the calibration phase 900 detailed in Figure 9.

Figure 9 depicts the algorithm executed by the central unit 106 of the base station 100, in order to implement the calibration phase or mechanism.

This algorithm begins by a step 901 during which the base station 100 prepares and sends measurement commands to each of the peripheral stations and updates the time parameter associated with each item of information representing the reception quality of a communication channel.

In a variant, the base station 100 prepares and sends measurement commands to certain peripheral stations only.

Next, at step 902, the base station determines the bandwidth available BWA having regard to the bandwidth resources allocated to the peripheral stations for their communications.

The base station also determines the bandwidth necessary BWN to the reception of all the information reports (BWN=(K-1)²xM) coming from all (K=N) the peripheral stations identical to the station 200.

In a variant, the base station 100 selects a subset of peripheral stations (K=S) to which a request will be sent with a view to obtaining a partial local information report or report command.

During the operation 903, a comparison is made in order to know whether the bandwidth available (BWA) is greater than the bandwidth necessary (BWN).

In the affirmative, step 906 is passed to.

In the negative, the base station 100 determines, at step 904, the bandwidth allocated to the local information report (BWLIR) for each of the K peripheral stations selected (BWLIR=BWA/(K-1)), this bandwidth allocated corresponding to a fraction of the bandwidth available.

Next the base station 100 verifies, during the test 905, that the bandwidth allocated for each local information report is less than the maximum bandwidth (BWLIRMAX=(N-1)xM) necessary for a complete local information report (BWLIR<BWLIRMAX).

In the negative, the base station 100 allocates, during the step 906, the maximum bandwidth necessary for a complete local information report (BWLIRMAX=(N-1)xM).

In a variant, the base station 100 allocates a fixed bandwidth not taking into account the number of peripheral stations present in the cell (BWLIRMAX=YxM)).

In such a configuration, it suffices to verify that the bandwidth necessary (BWN) is less than the bandwidth available (BWA), which makes it possible to simplify the above algorithm whilst saving on bandwidth.

## Claims

1. Method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said method includes the following steps performed at a peripheral station:
- receiving a request issued by the base station for obtaining a local information report,
- preparing a part of the local information report according to the reception quality of at least one communication channel between said peripheral station and another peripheral station, and
- sending said part of the local information report to the base station.

2. Method according to Claim 1, characterised in that the step of preparing a part of the local information report contains more particularly a step of selecting at least one item of information which will constitute at least part of the local information report to be sent.

3. Method according to Claim 1 or 2, characterised in that the part of the local information report must contain at least one item of information representing the reception quality of at least one communication channel between said sending peripheral station and another peripheral station having the greatest variation.

4. Method according to Claim 1 or 2, characterised in that the part of the local information report must contain at least one item of information representing the highest reception quality of at least one communication channel between said sending peripheral station and another peripheral station.

5. Communication device in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said device has:
- means for receiving a request issued by the base station for obtaining a local information report,
- means for preparing a part of the local information report according to the reception quality of at least one communication channel between said peripheral station and another peripheral station,
- means for sending said part of the local information report to the base station.

6. Device according to Claim 5, characterised in that the means for preparing a part of the local information report includes more particularly means for selecting at least one item of information which will constitute at least part of the local information report to be sent.

7. Device according to Claim 5 or 6, characterised in that the part of the local information report must contain at least one item of information representing the reception quality of at least one communication channel between said sending peripheral station and another peripheral station having the greatest variation.

8. Device according to Claim 5 or 6, characterised in that the part of the local information report must contain at least one item of information representing the highest reception quality of at least one communication channel between said sending peripheral station and another peripheral station.

9. Method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said method includes a step, performed at a peripheral station, of receiving a request issuing from the base station for obtaining part of a local information report.

10. Method according to Claim 9, characterised in that it includes the following steps:
- selecting at least one item of information which will constitute at least part of the local information report to be sent,
- sending said part of the local information report to the base station.

11. Method according to Claim 10, characterised in that the part of the local information report must contain at least one item of information representing the quality of reception of at least one communication channel between said sending peripheral station and another peripheral station having the greatest variation.

12. Method according to Claim 10, characterised in that the part of the local information report must contain at least one item of information representing the highest reception quality of at least one communication channel between said sending peripheral station and another peripheral station.

13. Communication device in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said device has means for receiving a request issuing from the base station for obtaining part of a local information report.

14. Device according to Claim 13, characterised in that it has:
- means for selecting at least one item of information which will constitute at least part of the local information report to be sent,
- means for sending said part of the local information report to the base station.

15. Device according to Claim 14, characterised in that the part of the local information report must contain at least one item of information representing the quality of reception of at least one communication channel between said sending peripheral station and another peripheral station having the greatest variation.

16. Device according to Claim 14, characterised in that the part of the local information report must contain at least one item of information representing the highest reception quality of at least one communication channel between said sending peripheral station and another peripheral station.

17. Method of communicating in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said method includes a step, performed at the base station, of sending to at least one peripheral station a request for obtaining a part of a local information report.

18. Method according to Claim 17, characterised in that it also includes the following steps performed at the base station prior to the sending step:
- determining the bandwidth necessary (BWN) to the reception of all the local information reports from the peripheral stations,
- comparing the bandwidth necessary (BWN) with the bandwidth available (BWA) in the network,
- allocating to at least one peripheral station a fraction (BWA/K) of the bandwidth available (BWA) when the bandwidth necessary (BWN) is greater than said bandwidth available (BWA).

19. Method according to Claim 18, characterised in that the request for obtaining a part of a local information report is sent to said at least one peripheral station to which a fraction (BWA/K) of the bandwidth available has been allocated.

20. Method according to one of Claims 17 to 19, characterised in that the part of the local information report must contain at least one item of information representing the reception quality of at least one communication channel between said at least one peripheral station and another peripheral station having the greatest variation.

21. Method according to one of Claims 17 to 19, characterised in that the part of the local information report must contain at least one item of information representing the highest reception quality of at least one communication channel between said at least one peripheral station and another peripheral station.

22. Method according to one of Claims 17 to 21, characterised in that it includes a step of receiving a part of a local information report coming from said at least one peripheral station.

23. Method according to Claim 22, characterised in that it includes a step of modifying a connection table forming part of the base station and containing all the local information reports of the peripheral stations, according to the information contained in the part of the local information report coming from said at least one peripheral station.

24. Method according to Claim 22 or 23, characterised in that, for each item of information contained in the part of the local information report coming from said at least one peripheral station and which represents the reception quality of a communication channel between said at least one peripheral station and another peripheral station, said method includes a step of associating, with each said information item, a time indication for identifying the age of this information.

25. Communication device in a communication network of the centralised type having a base station and several peripheral stations and in which the base station authorises direct communication between two peripheral stations in accordance with at least one local information report received from at least one of said two peripheral stations, each local information report from a peripheral station containing information representing the quality of reception of each communication channel between said peripheral station and other peripheral stations,
characterised in that said device has means for sending, to at least one peripheral station, a request for obtaining a part of a local information report.

26. Device according to Claim 25, characterised in that it also has:
- means for determining the bandwidth necessary (BWN) to the reception of all the local information reports from the peripheral stations,
- means for comparing the bandwidth necessary (BWN) with the bandwidth available (BWA) in the network,
- means for allocating to at least one peripheral station a fraction (BWA/K) of the bandwidth available (BWA) when the bandwidth necessary (BWN) is greater than said bandwidth available (BWA).

27. Device according to Claim 26, characterised in that the request for obtaining a part of a local information report is sent to said at least one peripheral station to which a fraction (BWA/K) of the bandwidth available has been allocated.

28. Device according to one of Claims 25 to 27, characterised in that the part of the local information report must contain at least one item of information representing the reception quality of at least one communication channel between said at least one peripheral station and another peripheral station having the greatest variation.

29. Device according to one of Claims 25 to 27, characterised in that the part of the local information report must contain at least one item of information representing the highest reception quality of at least one communication channel between said at least one peripheral station and another peripheral station.

30. Device according to one of Claims 25 to 29, characterised in that it includes a means for receiving a part of a local information report coming from said at least one peripheral station.

31. Device according to Claim 30, characterised in that it includes a means of modifying a connection table forming part of the base station and containing all the local information reports of the peripheral stations, according to the information contained in the part of the local information report coming from said at least one peripheral station.

32. Device according to Claim 30 or 31, characterised in that, for each item of information contained in the part of the local information report coming from said at least one peripheral station and which represents the quality of reception of a communication channel between said at least one peripheral station and another peripheral station, said device has means for associating, with each said item of information, a time indication for identifying the age of this information.

33. Base station, characterised in that it has a communication device according to one of Claims 25 to 32.

34. Base station, characterised in that it constitutes a communication device according to one of Claims 25 to 32.

35. Peripheral station, characterised in that it has a communication device according to one of Claims 5 to 8 and 13 to 16.

36. Peripheral station, characterised in that it constitutes a communication device according to one of Claims 5 to 8 and 13 to 16.

37. Data processing apparatus, characterised in that it has a communication device according to one of Claims 25 to 32.

38. Data processing apparatus, characterised in that it is connected to a communication device according to one of Claims 25 to 32.

39. Data processing apparatus, characterised in that it has a communication device according to one of Claims 5 to 8 and 13 to 16.

40. Data processing apparatus, characterised in that it is connected to a communication device according to one of Claims 5 to 8 and 13 to 16.

41. Apparatus according to one of Claims 37 to 40, characterised in that said apparatus is chosen from amongst a printer, a server, a computer, a facsimile machine, a scanner, a video tape recorder, a set-top box, a television receiver, a camcorder, a digital camera, a digital photographic apparatus or a loudspeaker.

42. Communication network, characterised in that it has a base station according to Claim 33 or 34 and several peripheral stations according to Claim 35 or 36.

43. Communication network, characterised in that it has a data processing apparatus according to Claim 37 or 38 and several items of data processing apparatus according to Claim 39 or 40.

44. Information storage means, possibly totally or partially removable, readable by a computer or a processor containing instructions of a computer program, characterised in that it allows the implementation of the method of communicating in a communication network according to any one of claims 1 to 4, 9 to 12 and 17 to 24.

45. Information storage means readable by a computer or a processor containing data resulting from the implementation of the method of communicating in a communication network according to any one of claims 1 to 4, 9 to 12 and 17 to 24.

46. Interface suitable for receiving the instructions of a computer program, characterised in that it allows the implementation of the method of communicating in a communication network according to any one of claims 1 to 4, 9 to 12 and 17 to 24.

47. Computer program product loadable into a programmable device, comprising software code portions for performing the steps of the method according to any one of claims 1 to 4, 9 to 12 and 17 to 24, when said product is run on a programmable device.
